# EUROPEAN PATENT APPLICATION

(11) **EP 2 541 437 A1**
(43) Date of publication of application: **02.01.2013**
(21) Application number: 11172181.7
(22) Date of filing: 30.06.2011
(51) Int. Cl.: G06F 17/30

(54) **Data base indexing**

(71) Applicant: dimensio informatics GmbH, 09111 Chemnitz (DE)
(72) Inventor: Leuoth, Sebastian, 08321 Zschorlau (DE); Adam, Alexander, 08468 Reichenbach (DE)
(74) Representative: Harrison, Robert John

(57) **Abstract**

The present disclosure relates to a method, and a system for structuring or re-structuring a plurality of data records, wherein the plurality of data records are organised in a hierarchical structure of a plurality of clusters. Each one of the plurality of clusters comprises one or more of the plurality of data records. The clustering of the plurality of clusters is based on nearness of the data records in the clusters and the plurality of clusters are arranged in the hierarchical structure according to the nearness of the data records.

## Description

The present disclosure relates to a method for structuring a set of data records, in particular for providing faster and more reliable access to data. The present disclosure relates in particular to a method for indexing a data base, for distributing data records in different locations and for organizing data in a memory.

### Introduction and prior art

Fast and reliable access to data bases is an aspect of many applications in IT systems. The amount of data stored in data bases is steadily increasing and it remains a challenge to respond to queries of a user of the data base in fast and reliable way, i.e. to identify and find data records in the data base that fulfil specific criteria a user is searching for, Methods for indexing data bases have been developed to provide faster access to data bases.

For example, US 2004/0024738 A1 describes a method for indexing multidimensional data bases. The method and the corresponding apparatus are based on an approximate information which clusters the multidimensional, data records according to the approximate information and generates a multidimensional index. The method is based on dividing a multidimensional space into a plurality of areas and generating the multidimensional indexes in association with the divided areas.

US 6,263,334 B1 discloses a method and an apparatus for performing nearest neighbour queries based on extraction of a multidimensional index. A probability function is determined and used to assign an index for each of the data records, A nearest neighbour query is than performed on the index.

US 2001/054034 describes a method for generating an index for a multidimensional data base. The multidimensional data base is accessed using this index.

Known methods focus on the formation of the index and the structuring of the index in order to create a search tree that can be used for identifying objects in the data base matching to a query inserted by a user.

Prior art data bases or data base indexes may be termed "static data bases" or termed "static indexes". Static indexes are generated and balanced at a certain point in time. If the structure of the static index is not sufficient, the generation of the index has to be repeated. In some data bases the index generation is repeated or reorganised on a regular basis, for example once a day or of once a week to take new entries in the data base into account. Prior art indexes are also static with respect to search queries. Search queries are applied to the data base to retrieve information. Search queries, however, do not influence the structure of an index.

It is an object of the present invention to overcome the disadvantages of prior art. In one aspect of the present disclosure modifications of the data base should improve the speed of a search in data base, Another aspect is improved reliability in findig the searched data in the data base

### Summary of the invention

The present disclosure relates to a method and a system for structuring or re-structuring a plurality of data records, wherein the plurality of data records are organised in a hierarchical structure of a plurality of clusters, Each one of the plurality of clusters comprises one or more of the plurality of data records, The clustering of the plurality of clusters is based on a nearness of the data records in the clusters and the plurality of clusters are arranged in the hierarchical structure according to the nearness of the data records. A data record may thereby comprise a plurality of values, fields or attributes. A clustering or indexing based on data records containing a plurality of attributes is termed multidimensional indexing,

The method comprises the steps of receiving a change relating to the at least one of the plurality of data records and modifying at least one of the plurality of clusters or at least a portion of the hierarchical structure or a combination thereof in relation to the indication of change. A change relating to at least one of the plurality of data records may involve modification of attributes or values of the data record, deletion of data records and/or insertion of additional data records.

The indication of change may also relate to the use of the hierarchical structure. For example a frequent use of a data record or of a combination of data records, This may involve weighting of values. This may also involve analysis of predicate lists in search queries in the data base.

The modifying at least one of the plurality of clusters or at least a portion of the hierarchical structure may involve a balancing of the structure and rearrangement of data records within the clusters.

In this way the hierarchical structure is continuously modified and changed, whenever a change relating to at least one of the plurality of data records occurs. The effect, i.e. the number of clusters involved in the change and the strength of the change can vary according to the type and origin of the modification or change.

The hierarchical structure and the organisation of the plurality of clusters may be structured based on neuronal networks. Clustering methods known from artificial intelligence can be applied to organise and structure the clusters in a hierarchical way.

The hierarchical structure may be a tree-like structure. A management tree structure may be determined based on the tree-like structure. The management tree structure may contain further optimisations and may allow fast search into the data base.

The method may be applied to a number of applications. For example the method may be used for indexing a data base. The method may equally be used for distributing data over different storage locations. For example, data may be distributed over a plurality of memories, data servers or in different hard ware elements. The clustering method of the present invention may be used to dynamically modify the places where data are actually stored.

The method may be also used for storing the data in a memory device such as a hard disk, a solid state disk or other types of memories known as such in the art. The method can be used to replace the existing bail systems and to physically place the data according to the hierarchical structure on the disk.

The method allows in all applications a considerably fast access to the data and to find the relevant data records within shorter time periods.

The present disclosure equally relates to a method for structuring or restructuring a plurality of data records. The method comprises receiving a set of the plurality of data records, clustering the plurality of data records according to a nearness of the data records in a plurality of clusters, forming a hierarchical structure from the plurality of clusters according to the nearness and of the data records in the cluster. The method further comprises receiving an indication of change relating to at least one of the plurality of data records and modifying at least one of the plurality of clusters or at least a portion of the hierarchical structure or a combination thereof in relation to the indication of change. The method can thus be used for setting up the structure and cluster and/or for modifying an existing cluster and/or hierarchical structure.

The present disclosure also relates to a computer program product implementing the method of the present disclosure.

The present disclosure also relates to a system comprising one or more memories for storing the data records and a structuring module carrying our the method.

### Description of the figures

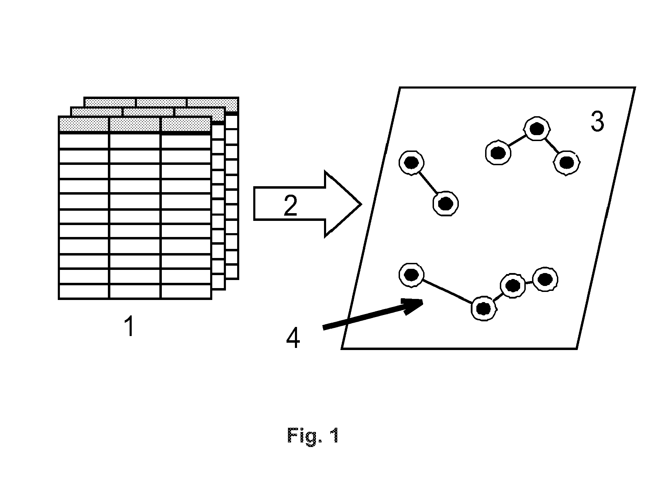

The invention may be better understood with respect to the detailed description and the attached figures of examples of the invention, in which figure 1 shows the generation of clusters from a given set of data;

Figure 2 shows the transformation of the clusters into a tree-like structure or an access structure;

Figure 3 shows how the invention may be applied for data-based indexing;

Figure 4 shows how the concept of the present disclosure may be used for distributing a data over a plurality of storage device;

Figure 5 shows how the present disclosure may be applied for organising the primary data in a memory; and

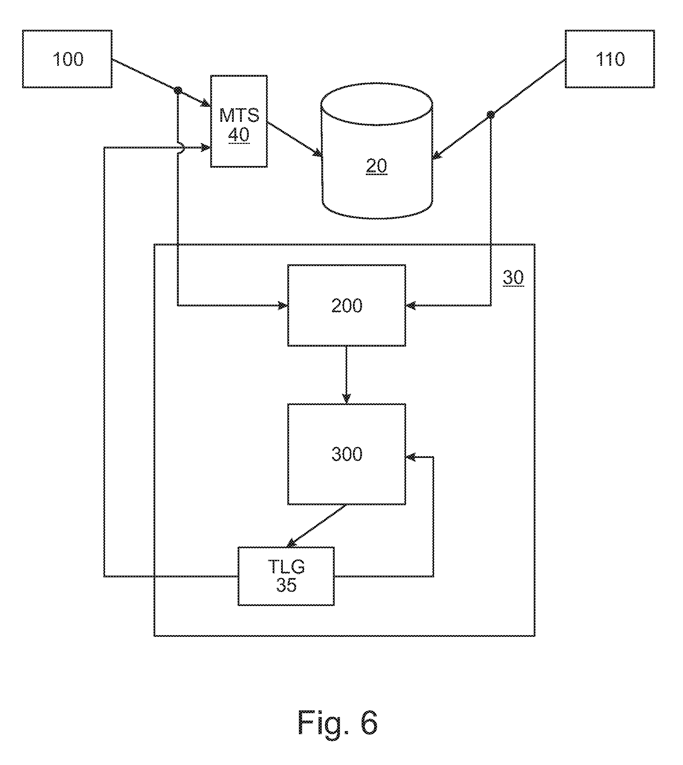

Figure 6 shows how the structuring of the data base.

### Detailed Description

Indexing is used to provide fast access to data bases containing a large amount of data. Usually, a given set of data is indexed in order to provide access to these data. A set of data comprises a plurality of data records. A data record may comprise one or more attributes, also termed data values, dimensions or fields. In a simple example, a data record relating to an address data base may comprise for example the fields or attributes name, surname, birth date, street, house number, postal code, city, telephone number, email address and possibly others. The present invention, however, is not limited to this example and any type of data base can be indexed with the apparatus and method of the present disclosure. Usually data records are far more complex. The way in which the indexing is performed is therefore relevant for speed of access to the data and reliability of results.

The complete set of data may be used directly for indexing or only a representative indicative of the data records may be used. If representatives are used, one representative may be used per data record and each one of the data records may have a corresponding representative. The representative can be a simple number, a value, a code or other. The representative of the a data record can also be one attribute of the corresponding data record or can be a combination of two or more attributes of the data record.

The term "indexing" involves structuring or ordering of the data records and/or their representatives in a certain structure to create an index. The index may allow access to the data through this structure. The way in which the index is generated and structured is relevant to improve the speed and reliability of access to the data. The structure is defined by intervals used for grouping a set of a data containing a plurality of data records. There are different methods that can be used for structuring sets of data and different mathematical and technical methods can be used to define the intervals and interval boundaries to separate the intervals from each other. One particular example of determining the intervals and the interval boundaries may involve clustering methods. The clustering method may apply statistical methods, such as Bayesian Estimation. Maximum Likelihood Estimation or may apply methods based on artificial intelligence or neuronal networks, such as K-means, artificial neural networks or others to form and arrange data records in clusters and arrange the clusters with respect to each other. These statistical, mathematical or neuronal methods are known per se. In this case, one or more of these methods may be applied to a given set of data or data records and will result in defined ones of intervals or clusters in which one or more data records or their representatives are grouped.

Figure 1 shows an example of how an input data set with the data records in any dimension may be structured. A clustering method may be used for determining the intervals even for high-dimensional data. A given set of data 1 with a plurality of data records is entered into the apparatus. A muni-dimensional feature space 3 is generated based on known or specifically generated rules or semantics. Clusters of the data records are defined by the application of a nearness definition indicative of the nearness between ones of the data records, The nearness definition is quite modular and a plurality of nearness definitions can be used with the present disclosure. The nearness definitions can also be generated or adapted to the use and requirements of the data base. Non -limiting examples of the nearness definition include a description of similarities in histograms, identity or similarity in patterns or formulas like the Simple Euclidian distance.

The nearness definition and the nearness of the data records in the multidimensional data space 3 can be described in different forms and/or formats. For example, the nearness definitions can be described by Semantic equivalence, i.e. a description of the nearness definition is given as an algorithm, a mathematical or logical formula. A description of the nearness definition may also involve procedural equivalence, i.e. the description of the definition given as a sequence of statements or the like. The clustering algorithm is modular and can be exchanged by other clustering algorithms or mechanisms.

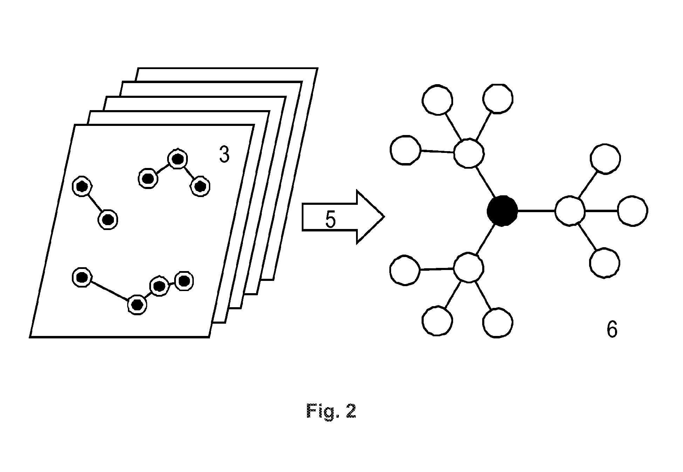

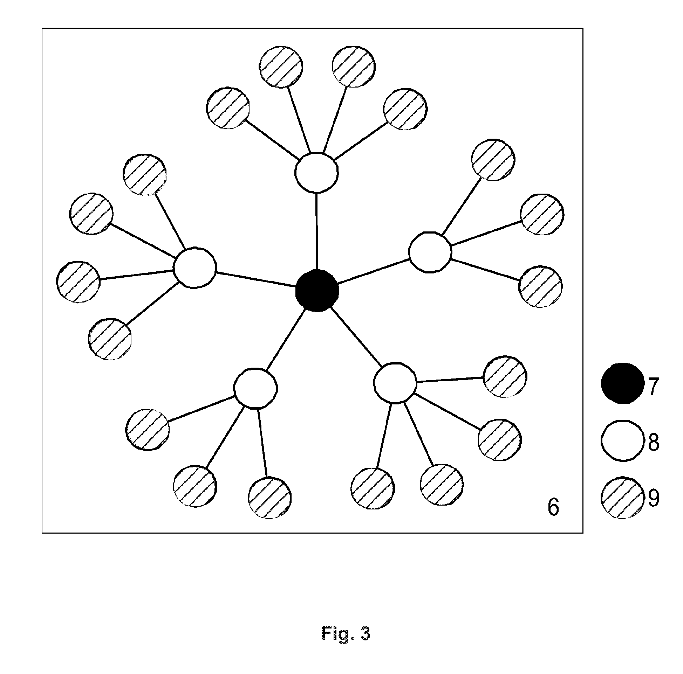

Based on the clustering in the multi-dimension feature space 3, an access structure such as a tree like graph (TLG) 6 is generated 5. The tree like graph 6 comprises nodes 7, 8, 9 and edges 70, 80, 90 wherein the nodes 7, 8, 9 include the clusters and the edges connect the nodes or clusters in a hierarchical way, thus forming a hierarchical structure. The structural hierarchy in the hierarchical structure represents the nearness of the data. The higher a cluster stands in the hierarchical hierarchy, such as for example root node 7 or inner node 8 in Figure 2 and 3, the lower is the nearness of the data records between each other. Usually, clusters in low positions, such as leaf nodes 9 may contain fewer elements or data records than clusters in higher positions. In some applications it might be useful to restrict the height of the tree-like graph to allow faster access to the cluster elements. For illustrative purposes only, the height of the structures in Figures 2 to 5 have been limited to three.

The cluster comprises a plurality of elements or entries which may be either the real data records or their representatives (key values of the data records). Using the representatives instead of the actual data record allows a smaller tree-like structure.

The choice of which ones of the data records or the representatives are used in the actual cluster and or which type of key values will be used depends on the technical environment and/or the application. In some instances, it might be useful to have the real data records provided in the tree-like structure while other applications may improve access time and ease retrieval of the searched data records if the key values or the representatives are used.

The tree-like-graph (TLG) and the cluster hierarchy may be used to determine the boundaries of the intervals. As the clusters are defined in a multidimensional space, the boundaries may be multidimensional as well and define the boundaries in one or more dimensions. The indexing intervals may be used and transformed into a management tree structure (MTS) or search tree. The management tree structure is optimised with respect to storage space and access speed and may be used for accessing the data base. The management tree structure (Search tree) can be held in most cases within the memory of the searching computer and improve access time to the data bases. However, if this is not possible, the management tree structure or parts of it may be swopped to a disc or other memory. The management tree structure thereby follows the hierarchy of the tree like graph and both are kept in parallel. The management tree structure may contain further optimisation to allow fast access and fast retrieval of the data elements.

The tree-like-graph (TLG) and the management tree structure (MTS) are both not static but are dynamically reorganised in a continuous and dynamic manner. Most data bases are not static and will be modified from time to time. The time intervals in which data bases are modified may vary depending on the date base and the actual use of the data base. Many data bases are continuously modified. Modification of a data base includes inserting new data records, deleting data records and modifying existing data records or parts of the data records. A change or modification of one of the data records may be regarded as deleting the data record and inserting a corresponding modified data record. If the data records in the data base are modified, deleted or added, there are two possibilities how these modified data records can be treated in the search tree or MTS. The modified data record can be added to the a node of the search tree to which it is estimated that the modified data record best fits. This method relies on experience and may not be sufficiently reliable. Alternatively the indexing procedure of the data base may be restarted after the modified a data record has been modified or added to the data base, or the existing indexing may be modified to take into account the modified data record.

The tree-like-graph is continuously adapted to cater for the newly inserted or deleted data records. Moreover the nearness of the data will change as soon as one of the data records has been added or deleted. This addition or deletion of the data record can have an influence in some instances only one or very few other data records or cluster. In other instance a large number of other data records in or around the corresponding cluster may be affected. As the clusters are modified by the addition, the modification or the deletion of the data records, the resulting tree-like-graph and the management tree structure are modified correspondingly. This modification is performed (substantially) continuously and results in a dynamic rearrangement of the hierarchical structure.

The dynamic rearrangement may relate to a portion or section of the TLG or the MTS only or may influence the entire TLG and/or the entire MTS. The type and amount of rearrangement may be different in the TLG and in the MTS. Due to the dynamic rearrangement both, the TLG and the MTS (search tree) vary more or less continuously. The search tree has always an optimised structure ensuring fast access to the data.

Using the dynamic rearrangement allows to adapt the search tree and the TLG quickly to the type of queries performed. If, for example, a certain information is searched more often, the search tree will be adapted almost immediately and these queries can be answered much faster.

Besides, the insertion or deletion of data records there may be other parameters which may initiate a modification or reorganisation of at least a portion of the tree-like-graph (TLG) and/or the management tree structure (MTS). An analysis of queries or a predicate list of the queries is analysed and weight values for the TLG or the MTS may be added or modified according to this analysis. Based on these weight values, the TLG and the MTS may be rearranged. For example, if a TLG cluster becomes too large or the MTS nodes run in an overflow, a rearrangement of the clusters and consequently of the TLG and the MTS may be performed. The rearrangement may involve moving a node up or down in the hierarchical structure. If a first node is moved up or down in the hierarchical structure, at least, a second node and eventually more nodes may be moved down or up. Depending on the influence of a rearrangement on the hierarchy of the hierarchical structure, the rearrangement may be performed with only a particular portion of the set of data or may involve the large parts or the entire set of data. Alternatively or in addition to the moving up or down of nodes, two or more nodes may be fused or a node may be split into two or more nodes. Fusing or splitting nodes may in turn influences the arrangement of neighbouring nodes and may cause other nodes to fuse, split and/or move up or down in the hierarchical structure, This may be termed (re-)balancing or weighting of the clusters.

Several aspects may be considered in (re-)balancing or weighting. For example, clusters and/or data records may be weighted using weight factors. Similar predicate lists may produce a higher weight value and clusters and/or nodes with higher weight values may be reorganised to higher tree level to minimise the internal search time; Clusters and/or nodes with similar weight values will force the tree like graph and/or the management tree structure to become more balanced, It may also be possible to keep nodes and clusters of the tree like graph and/or the management tree structure directly in the memory whenever this is possible as these nodes may be accessed more frequently.

For example, rebalancing, balancing or restructuring of the TLG and/or the MTS may be performed in the following situation: A given database has been analyzed (learned) during the initial index generation procedure. Thus, an index has been generated and the structure of the TLG and the MTS are complete. This index may be used. During use a plurality of queries are applied to the index to identity and find data records in the data base. The queries may be an ongoing stream of queries from several applications applied to the index and the indexed database, The predicate lists of the queries may be analysed to continuously build-up statistical information about the contents and the frequency of particular attribute lists of the queries. Based on the statistical information the method may determine whether queries are answered fast enough.

If the answering time of the database is acceptable for all queries, the index continues to collect the statistical information. The structure of the index remains unchanged except for the insertion and/or deletion of data which may influence the structural modifications of the TLG and the MTS as described above.

If the answering time of the database is not acceptable for all queries, the index collects and analyses the statistical information and decides about a reorganisation of clusters (TLG) and/or nodes (MTS). Reorganisation of clusters TLG and/or nodes MTS may be performed such that the reorganized TLG and MTS fit those queries better which are served insufficiently. The modification can comprise a split of clusters/nodes, a combination of clusters/nodes, a re-arrangement of clusters/nodes in the hierarchy, a re-arrangement of nodes within their hierarchy level or any combination of these methods.

Figure 9 shows an example of how the system and the method of the disclosure may be implemented, The plurality of data records is stored in a data base 20. The data base can comprise one ore more memory elements and the memory elements can be located in the same place or at different locations, A search query 100 uses the access structure or MTS 40 to access the data base and to retrieve the desired information or data record. Alternatively or in addition a modification of a data record 110 may be inserted into data base 20.

A data structuring module 30 which may be implemented in a computer or computer system receives an indication 200 when a search query 100 or a modification of a data record 110 has been occurred. The structuring module may perform statistic analysis of the received indications, for example if a search query occurred more frequently or if particular data record has been searched more or less frequently. The data structuring module 30 may, upon the indication of change 200, restructure the hierarchical organisation of the data records 300. The restructuring 300 results in a modified TLG 35 and a modified MTS 40.

Alternatively or in addition to a re-organisation of the TLG and the MTS, the data structuring module 30 may directly change the distribution of the data record over the data base 20 and/or may change the primary structure of how the data are written into the memory of data base 20.

While the above description has been provides with respect to indexing of data bases, it is to be understood that the present disclosure is not limited to indexing. The present invention may also be applied to other application in data bases, such as data distribution or primary organisation of data in storage medium (file structure). Some examples of possible application are given below.

### Examples

The following section introduces three examples how the present disclosure can be applied. Each example stands on its own but aspects of the examples may be combined as well. While only three examples are given, the invention is not limited to these three examples and the method may be applied to other structuring applications.

The method can be applied if more than one attribute (in terms of the method = dimension) of the data record determines the place of that data record in a given space. In this context the term "space" means storage space, search space, or any other environment which can be measured in or is spread out by a number of dimensions

### (1) Multi-dimensional Database Index

The method may be applied as a multi-dimensional database index to get fast access to database records, which have to be retrieved through multiple ones of the predicates, Figure 1 shows a simplified example of a TLG obtained as a multi-dimensional database index consider the following,
a) Database records are characterized by their primary key.
   - Here the standard database index for primary keys works quite sufficiently,
   - The method is .not necessary.
b) Database records are characterized through a combination of arbitrary values from their attributes (specified by a set of predicates within the query),
   ● Here the standard index for primary keys does not fit.
   ● Either the database system scans the database records for the predicate values or it applies so called secondary indexes (if they exist),
   ● Both take a lot of time.
   ● In addition most database systems are limited to a certain maximum number of possible secondary indexes.
   ● Here the method can be applied.

The method results in a TLG as shown in Figure 1 with a root node 7 connected to a plurality of inner nodes 8 which in turn are connected to leaf nodes 9 with data records or identifies for the data records.

The Primary-Key-Index is built up upon the ordering feature of the primary key domain of the data records - e.g. integer values.

A Secondary index (virtually) inverts the data record - i.e. for each of the values (say, "Müller") within one particular attribute (say, "name") - which is not the primary key attribute - there exists a list of primary keys of exactly those records which contain this particular value ("Müller") in this particular attribute ("name"). Thus, one Secondary Index can be created for each of the remaining non-key--attributes of a data record.

### (2) Distribution Index for distributed databases

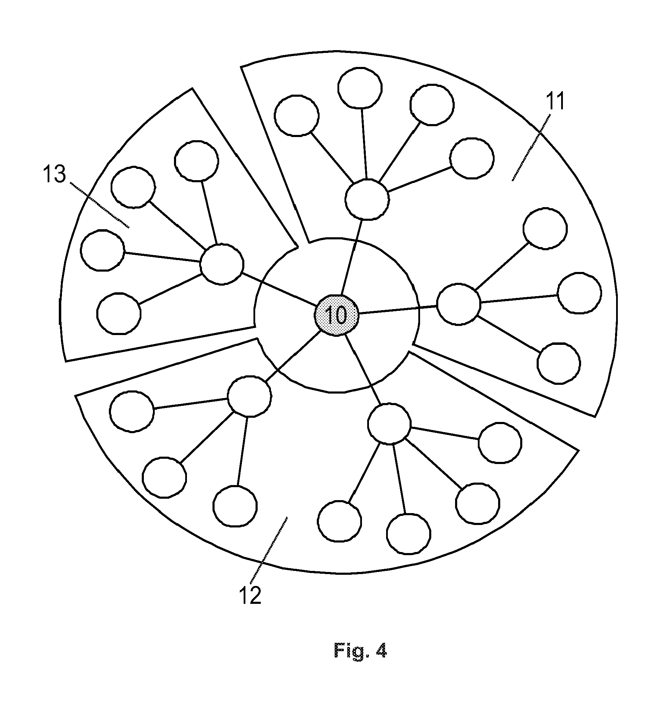

The method may be applied as support tool to determine the partitioning of data between different locations or partitions 11, 12, 13 before the distribution and to get access to distributed data from different sites after the distribution process (see figure 4).
a) Before the distribution (application of the TLG): The database administrator, an automated process respectively, has to decide about the kind of data which forms partitions, the size of partitions, and the location of partitions.
   ● Here the method can be applied as a decision support tool.
   ● The relations between clusters from the learning process are indicators for the decision which data the partitions 11,12,13 should form.
   ● The amount of record identifiers within clusters inform about the size of partitions 11, 12,13.
   ● The combination of attributes and the correlation of their values in combination with the above help to decide about the location of the partitions,
b) After the distribution (application of the MTS): A distributed database system includes a so called distribution schema. It contains information about the data within the partitions, the size of partitions, and the location of partitions (and a lot of statistical data).
   ● Here the method can be applied as a part of the distribution schema.
   ● The representation of clusters contains information about the data within the partitions.
   ● The representation, of clusters contains information about the size of partitions.
   ● The representation of clusters contains information about the location of partitions.

### (3) Primary Organization of Data

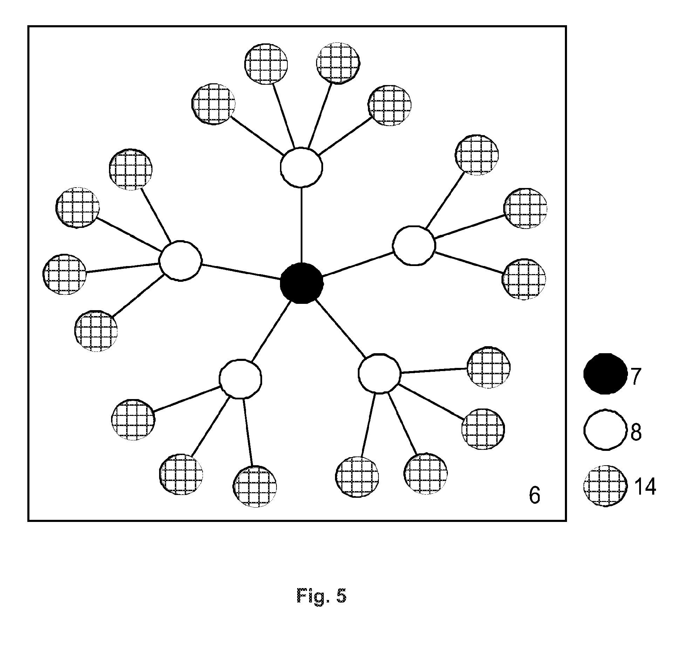

The method may be applied as primary organization method in database systems or in other systems that have to place data records in a certain order in memory or on storage media (see figure 5).

Data storage systems store their data records according to particular strategies on storage media. Examples are:
a) Data storage systems store their data records according to particular strategies on storage media. Examples are:
   ● Arbitrary order - i.e. records are stored as they enter the system. There is no ordering feature applied.
   ● Sequential order - i.e. data records are sored with respect to the sequential order of a particular attribute domain (in most cases the domain of the primary key).
   ● Hash method - i.e. a math function determines the address of the storage area for data records from the calculation of one or more attribute values of each record.
b) Here the method can be applied to determine the storage areas for data records on storage media or in memory through exploitation of the cluster information.
   ● All data records which have their representatives in one particular cluster of the TLG can be stored physically near to each other on the storage media (e.g. in a sequence of disc blocks).
   ● This results in an extremely fast access to all records with similar features,
   ● In terms of database technology this type of storage is called clustered storage or in more general global storage.

### Reference list:

1: Input data set
2: Generation process of the semantic knowledge
3: Multi-dimensional feature space
4: Semantic knowledge
5: Transformation process
6: Highly efficient access structure / TLG
7: Root Node
8: Inner Node
9: Leaf Node with data record identifiers
10_{:} Central distribution node
11 : First data node
12_{:} Second data node
13 Third data node
20: Data base
30_{:} Structuring Module
35: tree like graph
40: Access structure or MTS 40
100: Search query
110: Modification of a data record
200: Receiving indication of change
300: Re-structuring hierarchical structure

## Claims

1. A method for (re-)structuring a plurality of data records, wherein the plurality of data records are organised in a hierarchical structure of a plurality of clusters, wherein each one of the plurality of clusters comprises one or more of the plurality of data records and wherein the plurality of clusters is clustered based on a nearness of the data records and wherein the plurality of clusters are arranged in the hierarchical structure according to the nearness of the data records, the method comprising:
- receiving an indication of change relating to at least one of the plurality of data records;
- modifying at least one of the plurality of clusters or at least a portion of the hierarchical structure or a combination thereof in relation to the indication of change.

2. The method of claim 1, wherein the modifying the at least one portion of the hierarchical structure comprises redefining at least one interval relating to the nearness of the data records and/or redefining at least one interval boundary.

3. The method of claim 1 or 2, wherein the indication of change relates to use of the hierarchical structure.

4. The method of any one of the preceding claims, wherein the indication of change comprises at least one of adding a new data record to the plurality of data records, deleting a data record from the plurality of data records or modifying at least one data record of the plurality of data records.

5. The method of any one of the preceding claims, wherein the hierarchical structure of the plurality of clusters is structured based on a neuronal network,

6. The method of any one of the preceding claims, wherein at least one of the plurality of data records has a corresponding representative, and wherein the corresponding representative is organised in the hierarchical structure.

7. The method of any one of the preceding claims, wherein the hierarchical structure is a tree like structure (TLG) and wherein the method further comprises,
- determining a management tree structure (MTS) based on the tree like structure.

8. The method of claim 7, further comprising determining whether a node of the management tree structure runs in an overflow and modifying at least one of the plurality of clusters or at least a portion of the hierarchical structure or a combination thereof in relation to the indication of change if the management tree structure runs in an overflow.

9. The method of any one of the preceding claims, further comprising determining whether one of the plurality of clusters comprises more data records than a predetermined value and modifying at least one of the plurality of clusters or at least a portion of the hierarchical structure or a combination thereof in relation to the indication of change if one of the plurality of clusters comprises more data records than a predetermined value.

10. The method of any one of the preceding claims, wherein the structuring the plurality of data records comprises an indexing of the plurality of data records, of representatives of the plurality of data records or of a combination thereof.

11. The method of any one of the preceding claims, wherein the structuring the plurality of data records comprises a distribution of the plurality of data records on different storage locations.

12. The method of any one of the preceding claims, wherein the structuring the plurality of data records comprises storing the data records in a memory according to the hierarchical structure.

13. A method for structuring a plurality of data records, the method comprising:
receiving a set of the plurality of data records;
clustering the plurality of data records according to a nearness of the data records in a plurality of clusters;
forming a hierarchical, structure from the plurality of clusters according to the nearness of the data records in the cluster;
receiving an indication of change relating to at least one of the plurality of data records,
modifying at least one of the plurality of clusters or at least a portion of the hierarchical structure or a combination thereof in relation to the indication of change.

14. A system for (re-)structuring a plurality of data records, the system comprising one or more memories in which the plurality of data records are stored and a structuring module for structuring and/or restructuring the data records, wherein
the plurality of data records are organised in a hierarchical structure of a plurality of clusters, wherein each one of the plurality of clusters comprises one or more of the plurality of data records and wherein the plurality of clusters is clustered based on a nearness of the data records and wherein the plurality of clusters are arranged in the hierarchical structure according to the nearness of the data records, wherein the structuring module:
- receives a change relating to at least one of the plurality of data records;
- modifies at least one of the plurality of clusters or at least a portion of the hierarchical structure or a combination thereof in relation to the indication of change.

15. The system of claim 14, wherein the structuring module re-structures the plurality of data records by indexing the plurality of data records, representatives of the plurality of data records or a combination thereof.

16. The system of claim 14 or 15, wherein the plurality of data records are stored distributed over a plurality of memories and wherein the structuring module re-structures the plurality of data records by managing the distribution of the data records over the plurality of data records.

17. The system of any one of claims 14 to 16. wherein the plurality of data records are stored in the one or more memories according to the hierarchical structure.
